# EUROPEAN PATENT SPECIFICATION

(11) **EP 2 975 902 B1**
(45) Date of publication and mention of the grant of the patent: **17.03.2021**
(21) Application number: 15183427.2
(22) Date of filing: 27.09.2009
(51) Int. Cl.: H04W 74/00, H04W 48/00, H04W 92/04, H04W 80/04, H04W 84/04

(54) **COMPUTER PROGRAM AND APPARATUS FOR ACCESSING PACKET DATA NETWORK**
COMPUTER PROGRAMM UND VORRICHTUNG FÜR DEN ZUGRIFF AUF EIN PAKETDATENNETZ
PROGRAMME D'ORDINATEUR ET APPAREIL D'ACCÈS À UN RÉSEAU DE DONNÉES PAR PAQUETS

(30) Priority: 28.09.2008 CN 200810168477
(43) Date of publication of application: 20.01.2016
(62) Divisional of application: 09815627.6
(73) Proprietor: Huawei Technologies Co., Ltd., Longgang District Shenzhen, Guangdong 518129 (CN)
(72) Inventor: ZHANG, Yanping, Shenzhen, Guangdong 518129 (CN); ZHOU, Han, Shenzhen, Guangdong 518129 (CN); WU, Wenfu, Shenzhen, Guangdong 518129 (CN); HU, Weihua, Shenzhen, Guangdong 518129 (CN)
(74) Representative: Pfenning, Meinig & Partner mbB

(56) References cited:
- EP-A1- 1 881 660
- EP-A1- 1 916 803
- US-A1- 2008 080 428

## Description

### TECHNICAL FIELD

The present invention relates to network technologies, and in particular, to a method, an apparatus, and a system for accessing a Packet Data Network (PDN).

### BACKGROUND

A Femtocell system includes a wireless access point device, generally known as Femto Access Point (AP), which provides the wireless access function. The AP accesses the Internet through a router or Digital Subscriber Line (DSL) modem based on broadband access, and then accesses the network of the mobile operator. In a Long Term Evolution (LTE) network architecture of the 3rd Generation Partnership Project (3GPP), the AP is called Home Evolved Node B (HeNB); in a UMTS Territorial Radio Access Network (UTRAN), the AP is called Home Node B (HNB).

In the Femtocell architecture, the HNB/HeNB is connected with a Packet Data Network (PDN) in two modes: Traditionally, the HNB/HeNB is connected with the PDN through a Gateway GPRS Supporting Node (GGSN) or a PDN Gateway (GW); or, as put forward currently, the HNB/HeNB is connected with the PDN directly in order to save network resources of the operator.

Therefore, when a Serving GPRS Supporting Node (SGSN) receives an Activate Packet Data Protocol (PDP) Context Request, the SGSN selects a GGSN/PDN GW to create PDP context information for the User Equipment (UE) according to an Access Point Name (APN) carried in the Activate PDP Context Request only if the APN is legal, no matter which APN is included in the Active PDP Context Request. The UE may access the external PDN through the GGSN/PDN GW. If the UE can access the PDN through the HNB/HeNB directly or through the GGSN/PDN GW, the SGSN is unable to decide whether the UE will access the PDN through the HNB/HeNB directly or through the GGSN/PDN GW after receiving the Activate PDP Context Request from the UE.

US6069871 A discloses wireless communication system providing wireless service to a mobile unit operating within a service area and including a mobile switching center, at least one base station controller, a first plurality of base stations and a second plurality of base stations. The first plurality of base stations couple to the at least one base station controller and operate on a first carrier frequency. The second plurality of base stations couple to the at least one base station controller and operate on a second carrier frequency. The second plurality of base stations couple to the at least one base station controller and operate on a second carrier frequency. The mobile switching center and the at least one base station controller operate to assign the mobile unit to at least one of the first plurality of base stations or at least one of the second plurality of base stations based upon available base station capacities.

WO2004/057899 A1 discloses a mechanism for supporting the decision on performing a communication connection changeover of a subscriber terminal in a wireless communication network, in particular in a multiple band WLAN, is proposed. The subscriber terminal is able to communicate with an access node on two or more frequency bands. AP related communication information are detected which comprises, besides information indicating a multiple band capability, a traffic load, a frequency band coverage and/or a frequency channel information. The communication information are broadcasted, for example, by means of the AP beacon frame, processed and used for a decision on a communication connection changeover of the subscriber terminal.

EP1916803 A1 discloses a radio communication system including an AP with a PDP forward function unit forwarding service traffic accessing an AS to a Packet Radio Service Gateway Support Node or directly sends the Internet service data to the Internet via a configured forwarding interface according to the service property of the service traffic.

US20080080428 A1 discloses method for optimization of a handoff of a user equipment between packet switched and circuit swirched networks in response to a request circuit switched network services on the user equipment while the equipment is resident on a packet switched only network.

EP1881660 A1 discloses a method of radio access in which an MS may directly interact with the PS network through the radio access point and may transmit data through the circuit domain in the mobile communication network.

### SUMMARY

The invention is captured in the appended claims.

The embodiments of the present invention provide a method, an apparatus, and a system for accessing a PDN so that the SGSN can decide whether the UE will access the PDN through the HNB/HeNB directly or through the GGSN/PDN GW.

A computer program, stored in a computer readable storage medium, instructing hardware to: obtain access information, wherein the access information comprises information about a capability of a HeNB, communicating through a Gi/SGi interface; and if the HeNB is capable of communicating through the Gi/SGi interface, send a create bearer request message to the HeNB to select the HeNB to access the packet data network, PDN through the Gi/SGi interface on the HeNB.

An MME, configured to perform the above computer program.

### BRIEF DESCRIPTION OF THE DRAWINGS

FIG. 1 shows how a UE accesses a PDN through an HNB/GGSN/PDN GW in a Femtocell architecture;
FIG. 2 is a flowchart of a method for accessing a PDN in an embodiment of the present invention;
FIG. 3 is a flowchart of obtaining access information in an embodiment of the present invention;
FIG. 4 is flowchart of selecting an NE through a Gi/SGi interface according to access information in an embodiment of the present invention;
FIG. 5 shows a structure of an apparatus for accessing a PDN in an embodiment of the present invention;
FIG. 6 shows a structure of a selecting unit of an apparatus for accessing a PDN in an embodiment of the present invention;
FIG. 7 shows a structure of a system for accessing a PDN in an embodiment of the present invention;
FIG. 8 is a flowchart of a method for accessing a PDN in an embodiment of the present invention;
FIG. 9 is a flowchart of another method for accessing a PDN in an embodiment of the present invention; and
FIG. 10 is a flowchart of another method for accessing a PDN in an embodiment of the present invention.

### DETAILED DESCRIPTION OF THE EMBODIMENTS

The embodiments of the present invention provide a method, an apparatus, and a system for selecting an AP for connection so that the SGSN can decide whether a UE will access a PDN through an HNB/HeNB directly or through a GGSN/PDN GW. The following describes the embodiments of the present invention in detail with reference to accompanying drawings.

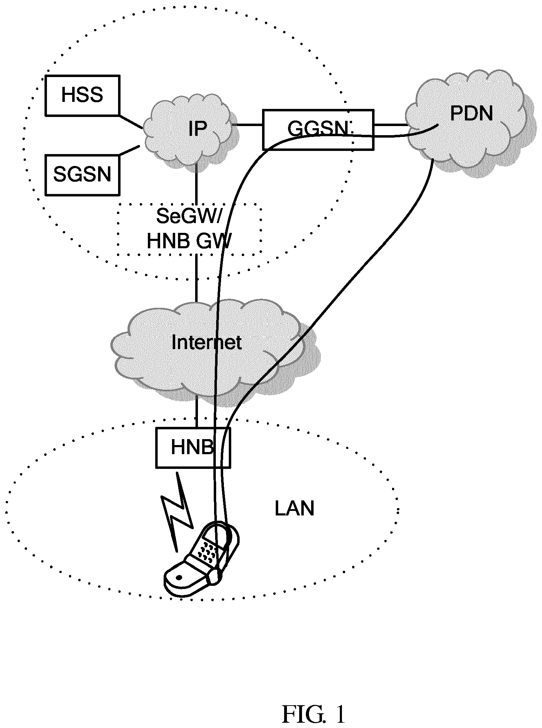

FIG. 1 shows network connection in a Femtocell architecture in an embodiment of the present invention. In this architecture, an HNB/HeNB is connected with a PDN in two modes: Traditionally, the HNB/HeNB is connected with the PDN through a GGSN or a PDN GW; or, as put forward currently, the HNB/HeNB is connected with the PDN directly in order to save network resources of the operator.

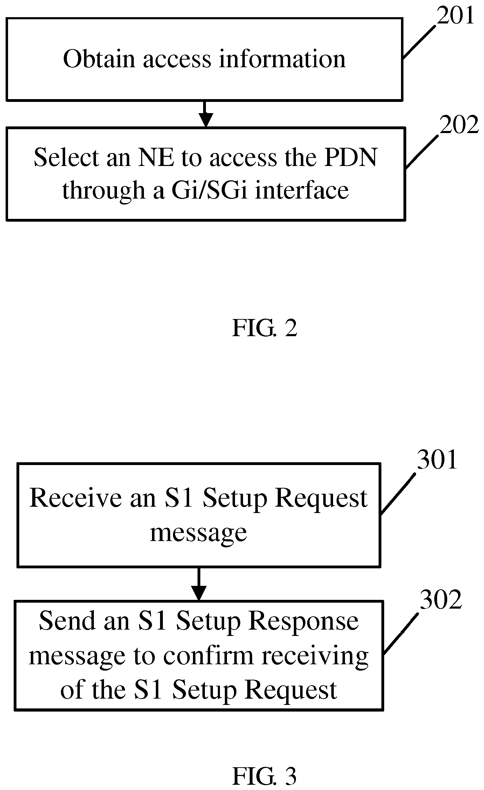

FIG. 2 is a flowchart of a method for accessing a PDN in an embodiment of the present invention. The method includes the following steps:
201. Obtain access information where the access information can be obtained according to an S1 Setup Request message or according to pres-stored NE access information.
202. Select an NE to access a PDN through a Gi/SGi interface according to the access information.

When no home access GW exists between the UE and a Mobility Management Network Element (MMNE), the access information includes: information about capabilities of the home access NE communicating through the Gi/SGi interface, or subscription information of the user, or combination thereof. When a home access GW exists between the UE and the MMNE, the access information includes at least: information about capabilities of the home access NE communicating through the Gi/SGi interface, information about capabilities of the home access GW communicating through the Gi/SGi interface, or subscription information of the user, or any combination thereof.

It should be noted that in all embodiments of the present invention, in the case of selecting an NE to access the PDN through the Gi/SGi interface, namely, in the case of determining that the NE is capable of communicating through the Gi/SGi interface, the NE may be connected with the PDN through the Gi/SGi interface on the NE.

FIG. 3 is a flowchart of obtaining access information in an embodiment of the present invention.

301. Receive an S1 Setup Request message where the S1 Setup Request message includes the access information.

302. Send an S1 setup response message in response to the S1 Setup Request message.

When the foregoing steps are performed by an MMNE, the received S1 Setup Request message may be sent by a home access NE or a home access GW. When the home access GW exists, the home access GW sends the S1 Setup Request message; when no home access GW exists, the home access NE sends the S1 Setup Request message.

Step 301 and step 302 above are also applicable to this scenario: A home access NE sends an S1 Setup Request message to a home access GW, where the message includes information about the capabilities of the home access NE, namely, information about the capability of communicating through the Gi/SGi interface. The home access GW stores the information about capabilities of the home access NE, namely, capability of communicating through the Gi/SGi interface, and reports its own capability information to the MMNE.

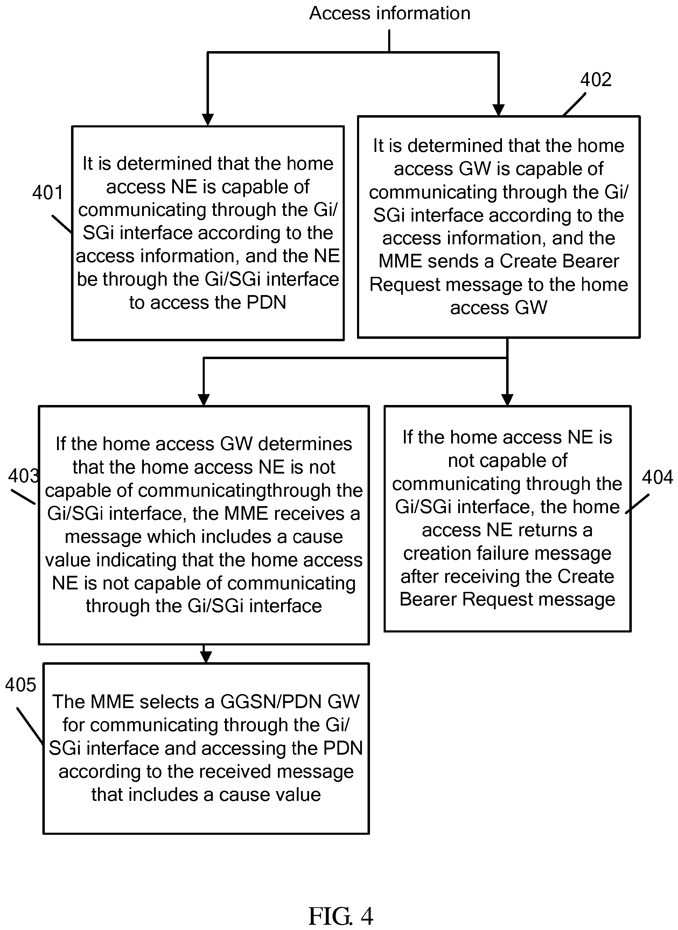

FIG. 4 is flowchart of selecting an NE through a Gi/SGi interface according to access information in an embodiment of the present invention. The process includes the following steps:
401. If the access information includes the information about capability of the home access NE communicating through the Gi/SGi interface, or subscription information of the user, or combination thereof, the MMNE determines that the UE can access the PDN through the home access NE capable of communicating through the Gi/SGi interface according to the access information, and sends a Create Bearer Request message to the home access NE.

If the access information is the information about capability of the home access GW communicating through the Gi/SGi interface, or a combination of the information about capability of the home access GW communicating through the Gi/SGi interface and subscription information of the user, the step of selecting an NE to access the PDN through the Gi/SGi interface includes:
402. If it is determined that the UE can access the PDN through a home access GW capable of communicating through the Gi/SGi interface according to the access information, the MMNE sends a Create Bearer Request message to the home access GW.
403. If the home access GW determines that the home access NE is not capable of communicating through the Gi/SGi interface, the MMNE receives a message which includes a cause value indicating that the home access NE is not capable of communicating through the Gi/SGi interface; or
404. If the home access NE is not capable of communicating through the Gi/SGi interface, the home access NE returns a creation failure message after receiving the Create Bearer Request message.

If the home access GW determines that the home access NE is not capable of communicating through the Gi/SGi interface, after the MMNE receives a message which includes a cause value indicating that the home access NE is not capable of communicating through the Gi/SGi interface, the process further includes:
405: The MMNE selects a GGSN/PDN GW to access the PDN through the Gi/SGi interface according to the received message that includes a cause value.

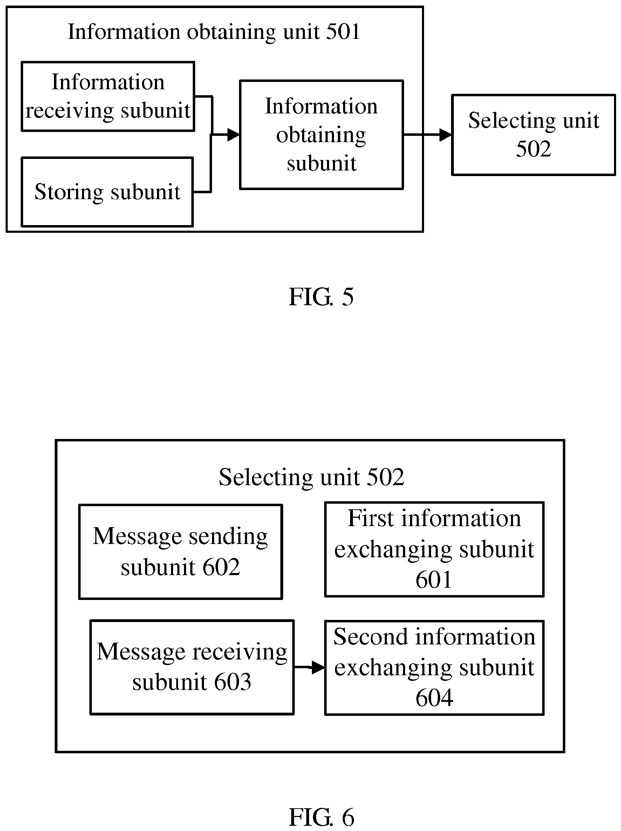

FIG. 5 shows an apparatus for accessing a PDN in an embodiment of the present invention. The apparatus includes:
an information obtaining unit 501, configured to obtain access information; and
a selecting unit 502, configured to select an NE to access the PDN through a Gi/SGi interface according to the access information.

The access information may be obtained through an information obtaining subunit in the information obtaining unit 501 from an information receiving subunit or storing subunit.

The information receiving subunit is configured to receive an S1 Setup Request that includes the access information.

The storing subunit is configured to store the access information of the NE, namely, store the access information of the NE through preconfiguration.

FIG. 6 shows an apparatus for accessing a PDN in an embodiment of the present invention. The selecting unit 502 in this apparatus further includes:
a first information exchanging subunit 601, configured to determine that the UE can access the PDN through a home access NE capable of communicating through the Gi/SGi interface according to the access information, whereupon the MMNE sends a Create Bearer Request message to the home access NE.

If the access information is the information about capability of the home access GW communicating through the Gi/SGi interface, or a combination of the information about capability of the home access GW communicating through the Gi/SGi interface and subscription information of the user, the selecting unit includes:
a message sending subunit 602, configured to determine that the UE is capable of accessing the PDN through a home access GW capable of communicating through the Gi/SGi interface according to the access information, whereupon the MMNE sends a Create Bearer Request message to the home access GW;
a message receiving subunit 603, configured to receive a creation failure message returned by the home access NE after the home access GW determines that the home access NE is not capable of communicating through the Gi/SGi interface and the MMNE receives a message which includes a cause value indicating that the home access NE is not capable of communicating through the Gi/SGi interface, or after the home access NE receives a Create Bearer Request message when the home access NE is not capable of communicating through the Gi/SGi interface.
a second information exchanging subunit 604, configured to select a GGSN/PDN GW to access the PDN through the Gi/SGi interface according to the received message that includes a cause value.

The embodiments of the present invention are expounded in more detail below with reference to accompanying drawings.

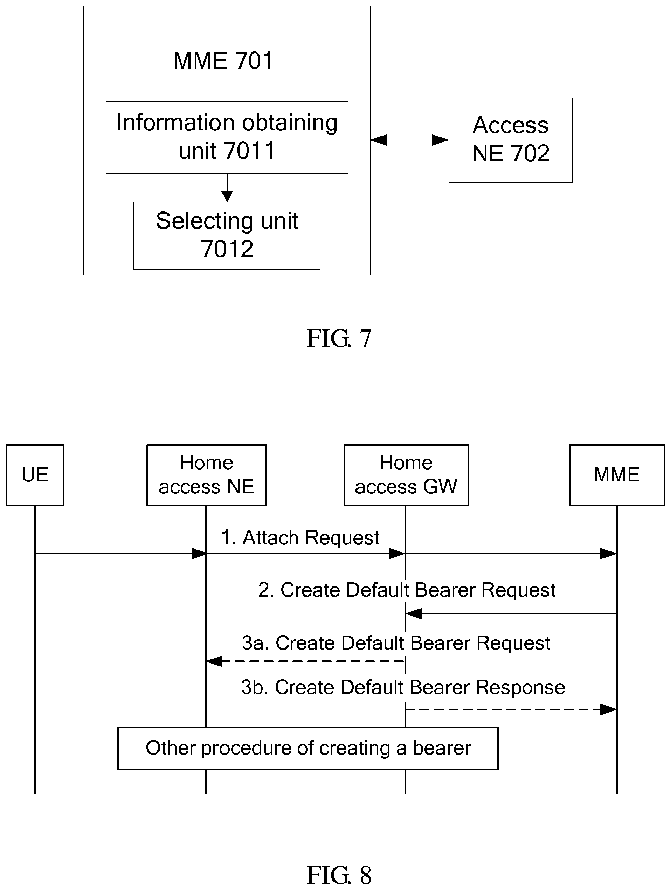

As shown in FIG. 7, a system for accessing a PDN is provided in an embodiment of the present invention. The system includes:
an MMNE 701, configured to receive or store access information of an access NE, judge access capability of the access NE according to the access information, and select the access NE to access the PDN through a Gi/SGi interface; and
the access NE 702, configured to exchange information between a UE and the PDN.

The MMNE 701 includes:
an information obtaining unit 7011, configured to obtain access information; and
a selecting unit 7012, configured to select an NE to access the PDN through a Gi/SGi interface according to the access information.

When a home access GW exists between the UE and the MMNE, the selecting unit 7012 includes:
a message sending subunit, configured to determine that the UE is capable of accessing the PDN through a home access GW capable of communicating through the Gi/SGi interface according to the access information, whereupon the MMNE sends a Create Bearer Request message to the home access GW; and
a message receiving subunit, configured to, when the home access GW determines that the home access NE is not capable of communicating through the Gi/SGi interface, the MMNE receives a message which includes a cause value indicating that the home access NE is not capable of communicating through the Gi/SGi interface; or when the home access NE is not capable of through the Gi/SGi interface, receive a creation failure message returned by the home access NE after the home access NE receives a Create Bearer Request message.

FIG. 8 is a flowchart of a method for accessing a PDN in an embodiment of the present invention. The method includes the following steps:
1. A UE sends an Attach Request to an MMNE. The Attach Request includes an AP capability information. The AP capability information may be included in the Attach Request to the MMNE, or included in an S1 Setup Request message and sent by a home access NE or a home access GW to the MMNE, or configured in the MMNE.
2. After receiving the Attach Request, the MMNE sends a Create Default Bearer Request message to the AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE communicating through the Gi/SGi interface, or a combination of the information about capability of the home access NE communicating through the Gi/SGi interface and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or subscription data of the user; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE.
3a. After the home access GW receives the Create Default Bearer Request, if the home access NE is capable of communicating through the Gi/SGi interface, the home access GW sends a Create Bearer Request to the home access NE.
3b. After the home access GW receives the Create Default Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

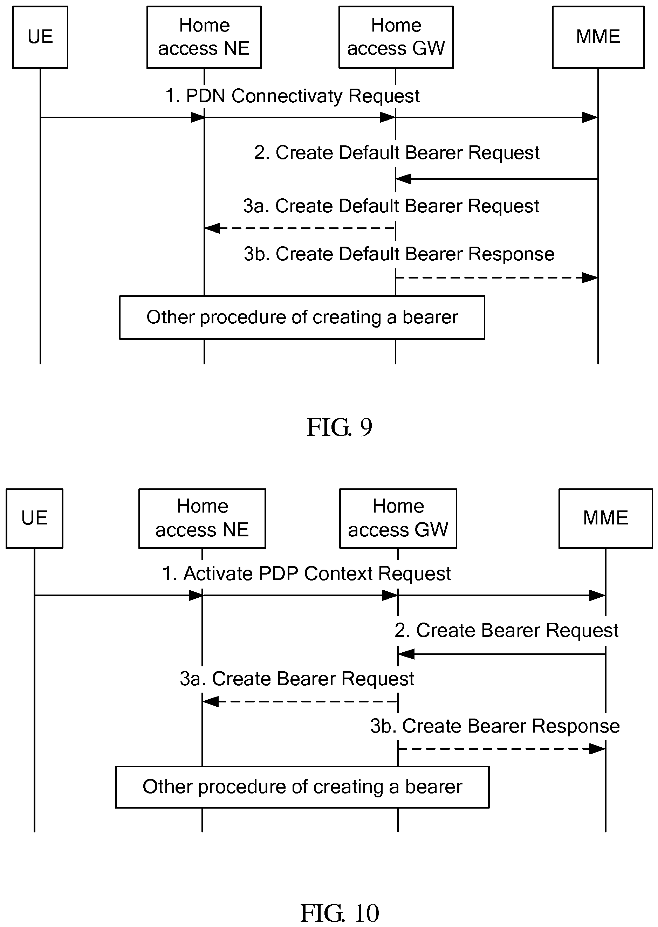

FIG. 9 is a flowchart of another method for accessing a PDN in an embodiment of the present invention. The method includes the following steps:
1. A UE sends a PDN Link Request to an MMNE. The PDN Link Request includes AP capability information. The AP capability information may be included in the PDN Link Request to the MMNE, or included in an S1 Setup Request and sent by a home access NE or a home access GW to the MMNE.
2. After receiving the Link Request, the MMNE sends a Create Default Bearer Request message to an AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE, or a combination of the information about capability of the home access NE and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE.

Alternatively, at least one link is already set up between the current UE and the PDN, and the link has communicated through the Gi/SGi interface through the home access NE to get connected with the PDN. Therefore, when the current UE needs to create a link to the PDN again, the current UE may communicate through the Gi/SGi interface through the home access NE to get connected with the PDN, or chooses to communicate through the Gi/SGi interface through the GGSN/PDN GW to get connected with the PDN, depending on the AP capability information.
3a. After the home access GW receives the Create Default Bearer Request, if the home access NE is capable of communicating through the Gi/SGi interface, the home access GW sends a Create Bearer Request to the home access NE.
3b. After the home access GW receives the Create Default Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

FIG. 10 is a flowchart of another method for accessing a PDN in an embodiment of the present invention. The method includes the following steps:
1. A UE sends an Activate PDP Context Request to an MMNE. The Activate PDP Context Request includes AP capability information. The AP capability information may be included in the Activate PDP Context Request to the MMNE, or included in an S1 Setup Request and sent by a home access NE or a home access GW to the MMNE.
2. After receiving the Activate PDP Context Request, the MMNE sends a Create Bearer Request message to an AP according to the AP capability information.

If no home access GW exists between the UE and the MMNE, namely, if the AP is a home access NE, the MMNE judges whether the home access NE can be connected to the PDN through the Gi/SGi interface directly according to the AP capability information reported by the home access NE. The AP capability information here includes: information about capability of the home access NE, or a combination of the information about capability of the home access NE and subscription information of the user.

If a home access GW exists between the UE and the MMNE, namely, if the AP is a home access GW, the MMNE judges whether the home access NE can be connected to the PDN through the Gi/SGi interface directly according to the AP capability information reported by the home access GW. The AP capability information here includes: information about capability of the home access GW; or a combination of the information about capability of the home access GW and subscription information of the user; or a combination of the information about capability of the home access NE, information about capability of the home access GW, and subscription information of the user. The process of reporting the AP capability information is shown in FIG. 3, and is not repeated here. The AP capability information may also be pre-stored on the MMNE. The subscription information of the user includes: information about the APN subscribed to by the user, and information about whether the UE is allowed to cross the Gi/SGi interface through the home access NE or home access GW to get connected with the PDN.

Alternatively, at least one link is already set up between the current UE and the PDN, and the link has communicated through the Gi/SGi interface through the home access NE to get connected with the PDN. Therefore, when the current UE needs to create a link to the PDN again, the current UE may communicate the Gi/SGi interface through the home access NE to get connected with the PDN, or chooses to communicate through the Gi/SGi interface through the GGSN/PDN GW to get connected with the PDN, depending on the AP capability information.
3a. After the home access GW receives the Create Bearer Request, if the home access NE is capable of communicating through the Gi/SGi interface, the home access GW sends a Create Bearer Request to the home access NE.
3b. After the home access GW receives the Create Bearer Request, if the home access NE is not capable of communicating through the Gi/SGi interface, the home access GW sends a Create Bearer Response message to the MMNE, where the message includes a cause value indicating that the home access NE is not capable of communicating through the Gi/SGi interface.

Through the method, apparatus, and system for accessing the PDN in the embodiments of the present invention, the MMNE obtains the access information to confirm the capability of the access NE, and selects the NE for communicating through the Gi/SGi interface. In the prior art, the UE can access the PDN through the HNB/HeNB directly or through the GGSN/PDN GW, and the SGSN is unable to decide whether the UE will access the PDN through the HNB/HeNB directly or through the GGSN/PDN GW. By comparison, the embodiments of the present invention can decide whether to communicate through the Gi/SGi interface according to the access information of the access NE. If it is decided to communicate through the Gi/SGi interface, the user can access the PDN through the HNB/HeNB directly. Because the core network NE (such as GGSN and PDN GW) is bypassed when the PDN network service is accessed through the HNB/HeNB directly, the load on the core network NE is relieved, and the network resources of the operator are saved.

Persons of ordinary skill in the art should understand that all or part of the steps of the method specified in any embodiment above may be implemented by a program instructing relevant hardware. The program may be stored in a computer readable storage medium such as ROM/RAM, magnetic disk or CD-ROM. When the program runs, the steps of the method specified in any embodiment above are performed.

The above descriptions are merely preferred embodiments of the present invention, but not intended to limit the scope of the present invention. Therefore, the protection scope of the present invention is subject to the appended claims.

## Claims

1. A computer program, stored in a computer readable storage medium, instructing hardware to:
obtain (201) capability information sent by a home evolved Node B, HeNB, when no home access gateway exists between a UE and a mobility management network element, MMNE, wherein the capability information comprises information about a capability of HeNB communicating through a Gi/SGi interface;, and
if it is determined that the HeNB is capable of communicating through the Gi/SGi interface according to the capability information, send a message to the HeNB, the message is used to select (202) the HeNB to access a packet data network, PDN, through the Gi/SGi interface on the HeNB.

2. The computer program according to claim 1, wherein the computer program instructs hardware to:
receive (301) an S1 setup request message, where the S1 setup request message comprises the capability information; and
obtain the capability information comprised in the S1 setup request message.

3. The computer program according to claim 1, wherein the computer program instructs hardware to:
store the capability information of the HeNB; and
obtain the stored capability information of the HeNB.

4. A mobility management entity, MME (701), configured to perform the computer program according to any one of the claims 1-3.

## Patentansprüche

1. Computerprogramm, gespeichert in einem computerlesbaren Speicherungsmedium, das Hardware anweist zum:
Erhalten (201) von Fähigkeitsinformationen, gesendet durch einen "Home evolved Node B", HeNB, wenn zwischen einem UE und einem Mobilitätmanagementnetzelement, MMNE, kein Heimzugangs-Gateway vorhanden ist, wobei die Fähigkeitsinformationen Informationen über eine Fähigkeit des HeNB zum Kommunizieren über eine Gi/SGi-Schnittstelle umfassen; und
falls bestimmt wird, dass der HeNB gemäß den Fähigkeitsinformationen fähig zum Kommunizieren über die Gi/SGi-Schnittstelle ist, Senden einer Nachricht an den HeNB, wobei die Nachricht verwendet wird zum Auswählen (202) des HeNB zum Zugang auf ein Paketdatennetz, PDN, über die Gi/SGi-Schnittstelle auf dem HeNB.

2. Computerprogramm nach Anspruch 1, wobei das Computerprogramm Hardware anweist zum:
Empfangen (301) einer S1-Aufsetz-Anforderungsnachricht, wobei die S1-Aufsetz-Anforderungsnachricht die Fähigkeitsinformationen umfasst; und
Erhalten der in der S1-Aufsetz-Anforderungsnachricht enthaltenen Fähigkeitsinformationen.

3. Computerprogramm nach Anspruch 1, wobei das Computerprogramm Hardware anweist zum:
Speichern der Fähigkeitsinformationen des HeNB; und
Erhalten der gespeicherten Fähigkeitsinformationen des HeNB.

4. Mobilitätsmanagemententität, MME, (701), ausgelegt zum Durchführen des Computerprogramms nach einem der Ansprüche 1-3.

## Revendications

1. Programme informatique, stocké sur un support de stockage lisible par ordinateur, donnant des instructions au matériel pour :
obtenir (201) des informations de capacité envoyées par un nœud B évolué domestique, HeNB, lorsqu'il n'existe pas de passerelle d'accès domestique entre une UE et un élément de réseau de gestion de la mobilité, MMNE, les informations de capacité comprenant des informations sur une capacité de HeNB communiquant par une interface Gi/SGi ; et
s'il est déterminé que le HeNB est capable de communiquer par l'interface Gi/SGi conformément aux informations de capacité, envoyer un message au HeNB, le message étant utilisé pour sélectionner (202) le HeNB pour accéder à un réseau de données par paquets, PDN, par l'interface Gi/SGi sur le HeNB.

2. Programme informatique selon la revendication 1, le programme informatique donnant des instructions au matériel pour :
recevoir (301) un message de demande de configuration S1, le message de demande de configuration S1 comprenant les informations de capacité ; et
obtenir les informations de capacité comprises dans le message de demande de configuration S1.

3. Programme informatique selon la revendication 1, le programme informatique donnant des instructions au matériel pour :
stocker les informations de capacité du HeNB ; et
obtenir les informations sur les capacités stockées du HeNB.

4. Entité de gestion de la mobilité, MME (701), configurée pour réaliser le programme informatique selon l'une quelconque des revendications 1 à 3.
